# EUROPEAN PATENT APPLICATION

(11) **EP 3 095 925 A1**
(43) Date of publication of application: **23.11.2016**
(21) Application number: 16169258.7
(22) Date of filing: 11.05.2016
(51) Int. Cl.: E04C 5/12, F16G 11/04

(54) **CLAMP LOCK ANCHOR**

(30) Priority: 18.05.2015 GB 201508519
(71) Applicant: Spiroll Precast Services Limited, Derby, Derbyshire DE22 3FP (GB)
(72) Inventor: CARR, Stephen Nicholas, Derby, Derbyshire DE22 3FP (GB)
(74) Representative: Appleyard Lees IP LLP

(57) **Abstract**

A clamp lock anchor for clamping a reinforcement member during manufacture of prestressed concrete component. The clamp lock anchor comprises a barrel having a barrel screw thread engagement feature and a wall which defines a tapered internal cavity. The clamp lock further comprises an end cap comprising : a head; a shoulder which extends away from the head; an end cap screw thread engagement feature for engagement with the barrel screw thread engagement feature. The clamp lock also comprises a clamp assembly comprising : at least two clamp wedges which, when assembled : form a frusto-conical shaped body with a load application end at its widest end; and each wedge defining part of a through passage which provides a clamp surface for receiving the reinforcement member.

## Description

The present disclosure relates to a clamp lock anchor.

In particular the disclosure is concerned with a clamp lock anchor for clamping, and thus restraining, a reinforcement member during manufacture of a pre-stressed concrete component.

### Background

It is known to manufacture concrete products, for example slabs, beams, columns, wall and floor panels and other components or elements with reinforcement members such as wires, cables or rods, which are generally referred to as "tendons". The concrete component may be formed in any number of ways.

For example, a mould or framework may be provided which defines the shape of the component to be made. Reinforcement members may be arranged in the mould, and then concrete added and laid around the reinforcement members. In some instances the reinforcement members are pre-tensioned prior to the concrete being laid around them. Hence as the concrete is formed into the shape of the component it surrounds the reinforcement tendon, sets, and thereby holds the tendon in place.

The reinforcement tendon may be made from a metal wire (i.e. a single member) or a metal strand (comprising several wires), and so it is important that at no point in the process is the tendon allowed to go slack. If it does then the concrete component will not be capable of holding the required and expected load for its design. Worse still, a sudden release of the tendon can result in the free end of the tendon moving at great speed which can cause severe damage and injury.

Hence a reliable means for clamping, and thus restraining, the tendon during the manufacturing process is highly desirable.

### Summary

According to the present disclosure there is provided apparatus as set forth in the appended claims. Other features of the invention will be apparent from the dependent claims, and the description which follows.

Accordingly there may be provided a clamp lock anchor for clamping a reinforcement member during manufacture of pre-stressed concrete component; the clamp lock anchor comprising : a barrel having : a barrel screw thread engagement feature; and a wall which defines a tapered internal cavity which extends between : a first opening with a first diameter at one end of the barrel; and a second opening at an opposite end of the cavity with a second diameter smaller than the first diameter; an end cap comprising : a head; a shoulder which extends away from the head; and an end cap screw thread engagement feature for engagement with the barrel screw thread engagement feature; a clamp assembly comprising : at least two clamp wedges which, when assembled : form a frusto-conical shaped body with a load application end at its widest end; and each wedge defining part of a through passage which provides a clamp surface for receiving the reinforcement member; the barrel, end cap and clamp assembly being configured to co-operate such that, in use : when a reinforcement member is entered in the clamp assembly; and the clamp assembly is located in the barrel cavity; the end cap screw thread is rotatable along the barrel screw thread such that the end cap shoulder transmits force to the load application end of the clamp assembly and thereby urges the clamp assembly into engagement with the barrel internal cavity walls, thereby urging the clamp wedges towards one another and clamping the reinforcement member.

The taper angle of the barrel internal cavity and the taper angle of the frusto-conical shaped body may be substantially the same as each other.

The at least two clamp wedges may be biased towards one another by a resilient member.

The resilient member may be located towards one end of the clamp wedges.

The resilient member may be a band or resilient material. The resilient member may be located in a groove provided in the barrel.

The clamp assembly through passage may be provided with at least one tooth which extends radially inwardly so as to engage with a reinforcement member located in the clamp assembly through passage.

The clamp lock anchor may comprise two barrels of substantially similar design; two clamp assemblies of substantially similar design, and wherein the end cap comprises : two shoulders, one shoulder extending away from one side of the head, the other shoulder extending away from an opposite side of the head; and two end cap screw thread engagement features; the barrels, end cap and clamp assemblies being configured to co-operate such that, in use : a first reinforcement member is entered in one of the clamp assemblies, and a second reinforcement member is entered in the other clamp assembly; one of the clamp assemblies is located in one barrel cavity, and the other clamp assembly is located in the other barrel cavity; one of the end cap screw threads is rotatable along one of the barrel screw threads; and the other end cap screw thread is rotatable along the other barrel screw thread; such that each of the end cap shoulders transmits force to the load application end of the respective clamp assembly; and each of the clamp assemblies is urged into engagement with its respective barrel internal cavity walls, thereby urging the clamp wedges of each clamp assembly towards one another and clamping its respective reinforcement member to thereby link the two reinforcement members.

There may also be provided a reinforcement member pre-loading apparatus comprising a clamp lock anchor according to the present disclosure.

There may further be provided a pre-stressed concrete component manufacturing apparatus comprising a reinforcement member pre-loading apparatus according to the present disclosure.

Hence there is provided a clamp lock anchor for restraining a reinforcement member, and thus maintaining tension in a reinforcement member, a reinforcement member pre-loading apparatus and a pre-stressed concrete manufacturing apparatus comprising a clamp lock anchor of the present disclosure, which will reliably grip a reinforcement member prior to, and during, the forming and curing of a concrete component.

### Brief Description of the Drawings

Examples of the present disclosure will now be described with reference to the accompanying drawings, in which:
Figure 1 shows an example of a concrete component manufacturing apparatus according to the present disclosure;
Figure 2 shows a side view of an alternative concrete component manufacturing apparatus according to the present disclosure
Figure 3 shows a side view of a reinforcement member pre-tensioning arrangement according to the present disclosure;
Figure 4 shows a view of an alternative reinforcement member pre-tensioning apparatus arrangement according to the present disclosure;
Figure 5 shows a cross-sectional view of a concrete product comprising a reinforcing member;
Figure 6 shows cross-sectional and end views of a barrel of a clamp lock anchor of the present disclosure;
Figure 7 shows a side view and end views of clamp wedges of a clamp assembly according to the present disclosure;
Figure 8 shows clamp wedges of the clamp assembly shown in Figure 7 displaced apart from one another;
Figure 9 shows the clamp wedges as shown in Figure 7 and Figure 8 with a reinforcement member held between the clamp wedges;
Figure 10 shows a side view and end view of an end cap for the clamp lock anchor;
Figure 11 shows an assembled clamp lock anchor comprising the barrel, end cap and clamp assembly shown in Figures 6 to 10;
Figure 12 shows a part exploded view of alternative example of a clamp lock anchor according to the present disclosure for clamping two ends of a reinforcement member together;
Figure 13 shows a view of the clamp lock anchor of Figure 14 when assembled;
Figure 14 shows the motion and forces acting on the clamp wedges of the clamp lock anchor of the present disclosure when moved in a direction indicated by the arrow B; and
Figure 15 shows a further view of the clamp wedges where they have been moved closer together than in the layout shown in Figure 14.

### Detailed Description

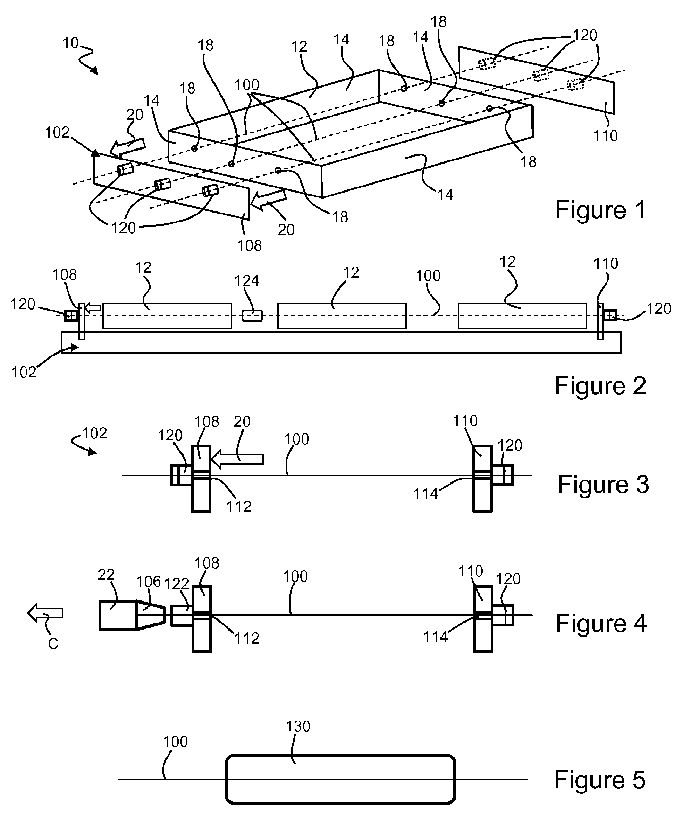

Figure 1 shows a pre-stressed concrete component manufacturing apparatus 10 according to the present disclosure. It comprises a framework or mould 12 which, in the example shown, defines a cuboid shape, although it may be provided in any required shape. The framework 12 comprises four walls 14 and a base 16 which will constrain the concrete added to it. Apertures 18 are provided in the end walls of the mould 12 through which reinforcement members/tendons 100 are passed so that the tendons 100 can span the volume defined by the mould 12.

There is also provided a reinforcement member pre-loading apparatus 102 which comprises plates (or "posts") 108, 110 spaced apart from one another and disposed at either end of the framework 12. The plates 108, 110 are part of a rigid structure for holding tendons 100 during a concrete product manufacturing process. The plates 108, 110 may be attached to a superstructure which allows for them to maintain their relative position and orientation as it is important the tendons 100 are held in place and at the desired tension.

In the example shown in Figure 1 there is provided one reinforcement member pre-loading apparatus 102 per mould 12. Figure 2 shows an alternative example where several frameworks 12 are placed in series between the posts 108, 110, with the reinforcement tendon 100 extending through the series of moulds 12.

In both examples anchors 120 according to the present disclosure are provided at either ends of the reinforcement member to hold it onto the posts 108,110 and thus maintain the position and tension in the tendons 100. Additionally an alternative design of anchor 124 according to the present disclosure may be provided along the length of the apparatus 102 where it may be required to join lengths of tendons 100 together, for example, joining two lengths of tendon to create a longer tendon.

Jacks (or "rams"), shown as arrows "20" in Figures 1, 2 and 3 to indicate the direction in which they act, are provided against the post 108. The post 108 is moveable in a direction away from the mould 12 such that when the jack 20 acts upon the post 108, it moves away from the mould 12 and post 110, and thus tensions the tendon 100, the post 110 being maintained in a fixed position,

Figure 3 shows the reinforcement member preloading apparatus 102 comprising a clamp lock anchor 120 according to the present disclosure. For clarity, this is shown without the mould framework 12. Although the reinforcement member pre-loading apparatus 102 is shown in the figures as being used in conjunction with a particular type of concrete component (i.e. "product", "element" or "structure") manufacturing apparatus 10, the reinforcement member pre-loading apparatus 102 may also be used in conjunction with concrete product manufacturing apparatus having alternative configurations.

As shown in Figure 3, the apparatus 102 comprises a jack 20 which acts against the post 108, sometimes referred to as an "abutment" post. The reinforcement member/tendon 100 may comprise a single wire (i.e. a single member) or a strand (comprising several wires). The wire or strand may comprise metal or metal alloys. Each plate 108, 110 has an orifice 112, 114 respectively through which the reinforcement member 100 extends. The tendon 100 thus extends through the clamp lock anchor 120, through the aperture 112 of the first plate 108 and then along the length of the region in which the concrete components will be formed, and passed through aperture 114 of the second plate 110, and held by another clamp lock 120 provided against on the second plate 110. That is to say, clamp lock anchors 120 are provided at either ends of the apparatus to grasp the reinforcement member tendon 100 where it extends out of and beyond the first plate 108 and second plate 110.

As shown in Figure 2, a further clamp lock anchor 124 may be provided between the posts 108,110 to join two pieces of tendon material 100a, 100b together to form a tendon 100 of sufficient length to span the length of the apparatus 10, 102. The jack 20 may be left in position to maintain the tension in the tendon 110 throughout the time it takes for the concrete to cure.

In an alternative example, shown in Figure 4, a different form of clamping mechanism 122 might be provided on the first plate 108 (i.e. the "jack" end) to grasp the tendon 100. In such an example, a clamp anchor 120 is provided at the "dead" end of the arrangement (i.e. proximate to the second plate 110), holding the tendon 100 against the plate/post 110. Initially the clamp anchor 120 at the dead end is tightened down on the reinforcement member 100 to clamp the clamp anchor 120 and reinforcement member 100 together. With the parts shown in Figure 4 in place, the jack 22 is moved away from the mount plate 108 in a direction shown by arrow C in Figure 4 to pull the reinforcement member tendon 100 against the second plate 110, the clamp anchor 120 at the dead end stopping the reinforcement member 100 moving relative to the second plate 110. This puts the reinforcement member 100 into tension up to a load as required and desired by the user. Thus in this arrangement a jack 22 with jaws 106 grasps the end of the tendon 100 directly and pulls it to the desired extent before the clamp lock 122 is actuated to hold the tendon. The jack 104 may then be removed leaving the clamp lock 122 at the jack end (opposite to the "dead end") to prevent the reinforcement member 100 from moving relative to the first plate 108, and thereby maintains tension in the reinforcement member 100.

As shown in Figure 3, a plate 108, 110 may comprise several apertures 112, 114 and used in conjunction with several clamp lock anchors 120. Hence the jack 104 may be used to pre-load several reinforcement members 100 at the same time.

Alternatively, and as shown in Figure 4, the pre-stressed concrete manufacturing apparatus may comprise one set of plates 108, 110 per reinforcement member 100. Thus several sets of plates 108,110 will be required to provide a number of reinforcement members 100 in the same concrete product.

As stated above, the reinforcement member 100 extends through the volume to be filled by concrete (e.g. the component 130 shown in Figure 5). After the concrete has been laid and has cured sufficiently, the jacks 20,22 (if still present) are disengaged and the clamp locks 120,122, 124 are removed, and since the pre-tensioned reinforcement tendon 100 is held by the concrete, there is thus provided a pre-stressed component 130. The product 130 is then removed from the mould 12.

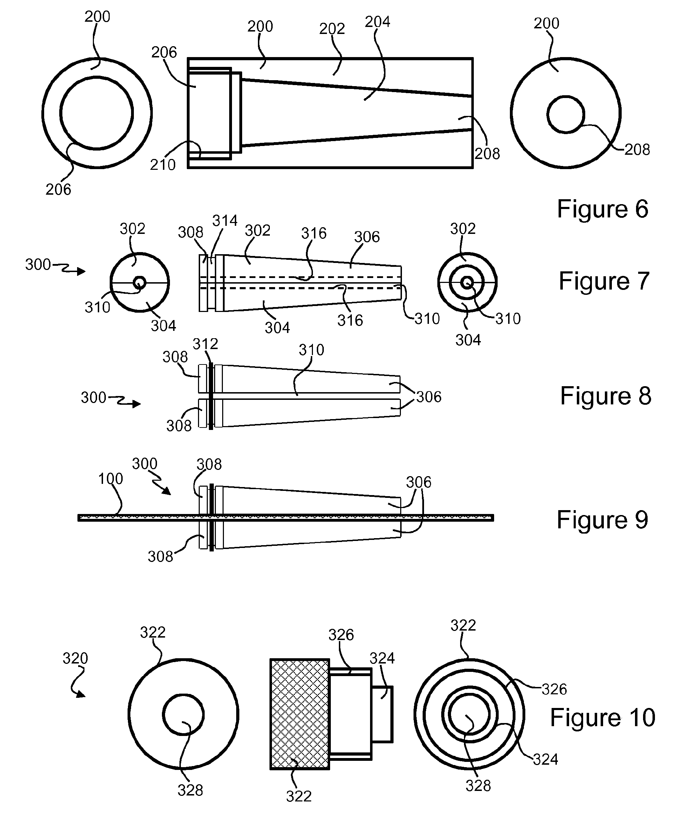

Figures 6 to 13 show the elements of the clamp lock anchor 120 according to the present disclosure. Figure 6 shows a main body, or "barrel" 200 of the clamp lock anchor 120 of the present disclosure. A cross-sectional view is shown flanked on either side by end views of the same component. The barrel 200 has a wall 202 which defines an internal cavity 204. The internal cavity 204 has a first opening 206 with a first diameter at one end of the barrel 200. It also has a second opening 208 at an opposite end of the cavity 204 with a second diameter, where the second diameter is smaller than the first diameter of the first opening 206. The wall 202 which defines the cavity extends between the openings 206, 208 to define a tapered, or frusto-conical shaped, portion of the cavity 204. It further comprises a screw thread engagement feature 210. In the example shown the internal screw thread 210 is provided towards, or at, the first opening 206.

Figure 7, 8 and 9 show a clamp assembly 300. The clamp assembly 300 comprises at least two clamp wedges (or "grips") 302, 304 which, when assembled, form a frusto-conical shaped body 306.

The clamp assembly 300 may comprise two or more clamp wedges 302, 304. For example depending on the shape or surface profile of the reinforcement member 100 to be clamped, it may be beneficial to have three clamp wedges 302, 304 which, when assembled, form the frusto-conical shaped body 306.

The frusto-conical shaped body 306 is provided with a load application end 308 at its widest end. When assembled the two clamp wedges 302, 304 also define a through passage 310 which provides a clamp surface for receiving a reinforcement member 100 as shown in Figure 9. That is to say, each wedge 302,304 defines part of a through passage 310 which is configured to provide a clamp surface for receiving and grasping a reinforcement member 100.

The clamp wedges 302, 304 are biased towards one another by a resilient member 312. The member 312 may be provided at one end of the clamp wedges 302, 304. That is to say, the clamp wedges 302, 304 may be biased towards one another by a resilient member 312 at one end of the clamp wedges 302, 304. Hence the clamp wedges 302,304 are pivotable relative to one another, such that the clamp wedges can be angled relative to one another, coming together at the end where they are biased together by the resilient member 312. The resilient member 312 also allows for the clamp wedges to be spaced apart from one another along their entire length. The resilient member 312 may be located in a groove 314, and the groove 314 may be provided towards one end of the clamp wedges 302, 304. The resilient member 312 may be provided as a band of resilient material. For example, the resilient member 312 might be a ring of rubber or the like, for example an O-ring.

The clamp assembly through passage 310 may be provided with at least one tooth 316, for example provided as ribs or a screw thread on the inner surface of the passage 310 which extend radially inwards. That is to say, the at least one tooth 316 may extend radially inwardly towards the centre of the through passage 310 so as to engage with a reinforcement member 100 located in the clamp assembly through passage 310.

The clamp lock anchor 120 further comprises an end cap 320 as shown in Figure 10, which shows a side view and end views of the end cap 320. The end cap 320 comprises a head (or "engagement feature") 322, with, for example, a diamond knurl or other surface configured for a user to hold and turn the end cap 320 (for example a polygonal nut shape, in particular a hexagonal nut). In the example shown, the head 322 is formed at one end of the end cap 320. The end cap 320 further comprises a shoulder 324 which extends away from the head 322. The end cap 320 further comprises an end cap screw thread engagement feature 326 for engagement with the barrel screw thread 210. In the example shown the end cap screw thread region 326 is located between the ends of the end cap 320. That is to say, the threaded region 326 is provided between the engagement feature 322 and the shoulder 324. The end cap 322 further comprises a through passage 328 which opens at both ends of the cap 322. In the example shown the passage 328 extends from the engagement feature end 322 to the shoulder end 324 of the end cap 322.

The angle of the barrel internal cavity 204 and the angle of the frusto-conical shaped body formed by the clamp wedge assembly 300 are substantially the same as each other. That is to say, the profile of the outer surface of the clamp wedge assembly 300 is complementary in shape to the internal profile of the barrel 200. Put another way, the taper angle of the barrel internal cavity 204 and the taper angle of the frusto-conical shaped body 300 are substantially the same as each other.

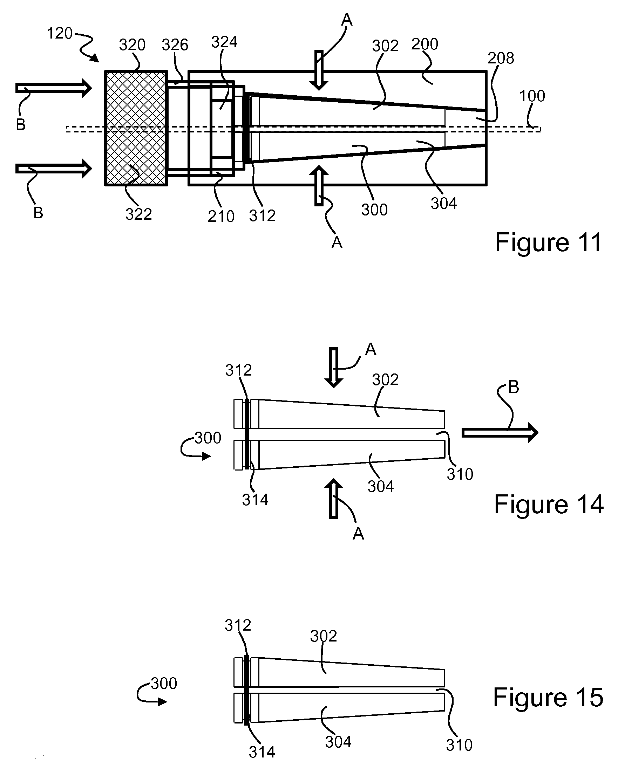

The geometries of the barrel 200, end cap 320 and clamp tooth assembly 300 are configured such that the parts may co-operate to clamp a reinforcement member 100. That is to say, and as shown in Figure 11, when the clamp assembly 300 is located in the barrel cavity 204, the end cap screw thread 326 is rotatable along the barrel screw thread 210 such that the end cap shoulder 324 is in direct force communication with the load application end 308 of the clamp assembly 300 and thereby urges the clamp assembly 300 into engagement with the barrel internal cavity walls 202. Put another way, the end cap 320 will transmit force directly to the load application end 308 of the clamp assembly. The end cap shoulder 324 may be in direct contact with the load application end 308 of the clamp assembly 300, that is to say, there may be nothing placed between the shoulder 324 and the load application surface 308. Alternatively an incompressible, or substantially incompressible, spacer (for example a washer) may be provided between the shoulder 324 and load application end 308 of the clamp assembly 300, but because the spacer is incompressible, the shoulder 324 is in direct force communication with the clamp assembly 300.

Since the shoulder 324 is configured to be direct contact with the clamp assembly 300, or at least in direct force communication with the clamp assembly 300, every unit of length travelled by the screw cap 320 translates into a clamping force induced between the clamp surfaces of clamp wedges 302,304.

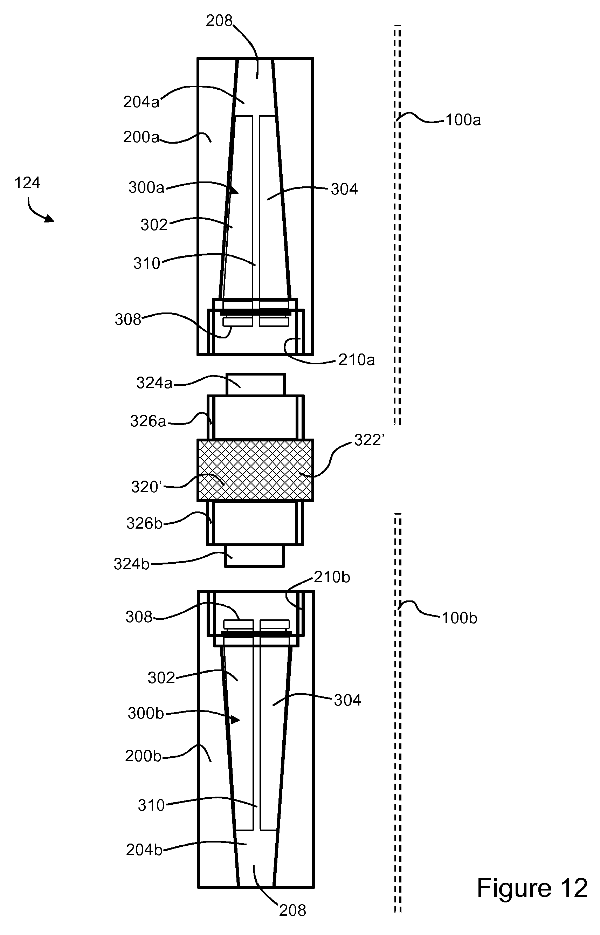

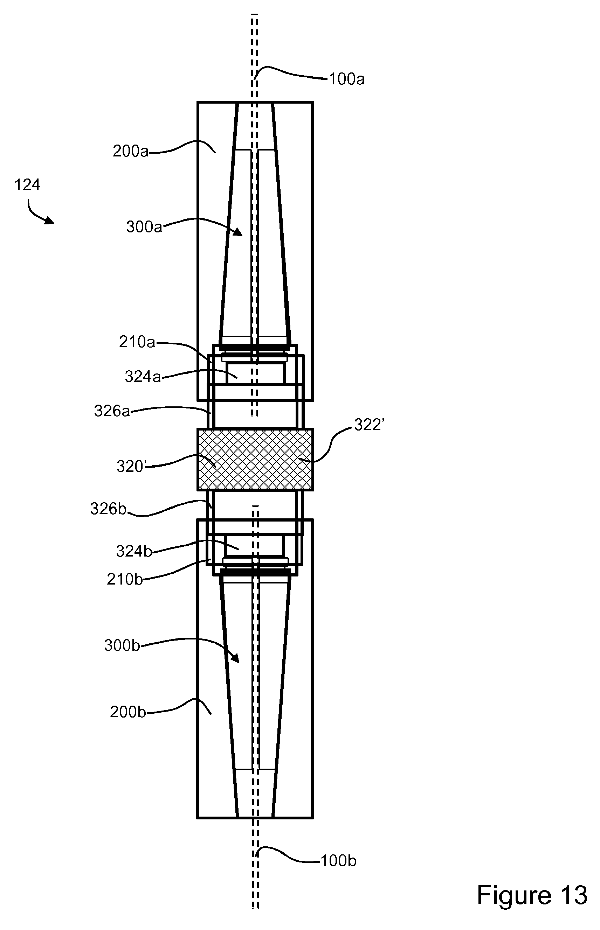

Figures 12, 13 show the alternative example of the clamp lock anchor 124 as previously described in relation to Figure 2. The clamp lock anchor 124 of Figures 12,13 comprises two barrels 200 and two clamp assemblies 300. That is to say, the clamp lock anchor 124 comprises a first barrel 200a, a second barrel 200b, a first clamp assembly 300a and a second clamp assembly 300b. The features of the barrels 200a, 200b, and clamp assemblies 300a, 300b are as previously described in relation to the clamp lock anchor 120 shown Figures 6 to 9. Hence it comprises two barrels 200a, 200b of substantially similar design and two clamp assemblies 300a, 300b of substantially similar design. The clamp lock anchor 124 differs only in that its end cap 320' is "double ended" in that a screw thread 326 and shoulder 324 extend from both sides of a central head 322' of the anchor 124. That is to say, the end cap (or "plug") 320' comprises two shoulders 324, a first shoulder 324a extending away from one side of the head 322', the second shoulder 324b extending away from an opposite side of the head 322'. It also comprises two end cap screw thread engagement features 326a, 326b located to either side of the head 322' of the end cap 320'. Hence a first end cap screw thread engagement feature 326a is provided between the first shoulder 324a and the head 322'. The second end cap screw thread engagement feature 326b is provided between the first shoulder 324b and the head 322'.

With reference to the example of Figure 11, in operation the assembled clamp lock anchor 120 is threaded over the end of the reinforcement member 100 such that the reinforcement member 100 passes through the passage 328 of the end cap, passage 208 of the barrel 200 and passage 310 of the clamp assembly 300. The clamp lock anchor 120 is located next to the plate 108/110 while the end cap 320 is tightened up against the load application end 308 of the clamp assembly 300 to urge the clamp assembly 300 along the length of the barrel 200, for example in the direction shown by arrow B in Figure 14. Figures 14,15 show the clamp assembly 300 as it may appear in use inside the barrel 200, but shown without the barrel 200, end cap 320 or reinforcement member 100 for clarity. Hence, the clamp wedges 302, 304 may be spaced apart by a first distance as they clamp around the reinforcement member 100, as shown in Figure 14, held together by the resilient member 312.

As the end cap 320 is screwed into the barrel 200, the shoulder 324 of the end cap 320 is forced towards and transmits force to the load application end 308 of the clamp wedges 302, 304 to push the clamp assembly 300 in the direction shown by arrow B in Figure 11 and Figure 14. This causes the outer surface of the clamp assembly 300 to be pressed against the inner surface of the passage 208 of the barrel 200, thus forcing the clamp wedges 302, 304 together as shown by arrow A in Figures 11, 14, reducing the distance between the clamp wedges 302,304 (for example as shown by the change in distance between the wedges 302, 304 shown in Figure 14 and Figure 15). Hence the clamp wedges 302, 304 are clamped against the tendon 100. As the barrel cavity 204 and the frusto-conical shaped body 306 of the clamp assembly 300 are complementary in shape, and the largest diameter of the clamp assembly 300 is greater than the smallest diameter of the passage 208 of the barrel 200, the clamp assembly 300 cannot pass out of the second opening 208 of the barrel 200.

Thus the wedges 302,304 and clamp teeth 316 are urged towards one another to grip and clamp the tendon 100.

The alternative (double ended) clamp lock anchor 124 shown in Figures 12, 13 operates on the same principle. A first reinforcement member 100a is entered in the first clamp assembly 300a, and a second reinforcement member 100b is entered in the second clamp assembly 300b. The first clamp assembly 300a is located in the first barrel cavity 204a, and the second clamp assembly 300b is located in the second barrel cavity 204b.

The first end cap screw thread 326a is rotatable along the first barrel screw thread 210a and the second end cap screw thread 326b is rotatable along the second barrel screw thread 210b such that each of the end cap shoulders 324a,b directly transmits force to the load application ends 308a, 308b of their respective clamp assembly 300a,b, as discussed above for the clamp anchor 120. Consequently each of the clamp assemblies 300a,b is urged into engagement with its respective barrel internal cavity walls, thereby urging the clamp teeth of each clamp assembly 300a,b towards one another and clamping its respective reinforcement member 100a, 100b to thereby link the two reinforcement members 100a, 100b. That is to say, the wedges 302, 304 at each end of the clamp anchor 124 are forced into engagement with the internal walls of their respective barrel cavity, and thus are forced into engagement with their respective reinforcement member 100a, 100b, thereby providing a means to robustly link reinforcement members 100a, 100b together.

The direct contact and/or force transmission between the end cap and clamp assembly of both examples of clamp anchor 120, 124 allows for an initial clamp force to be set by a user which is predictable and positive in that once a certain force has been applied to the end of the clamp assembly 300, the clamp wedge 302, 304 cannot open any further. Hence a user knows that having clamped the reinforcement member 100, 100a, 100b by a device of the present disclosure, it cannot become released unless the end cap 320, 320' is rotated relative to barrel(s) to which it is engaged and hence slacken off the clamp wedges 302, 304.

Having been initially clamped by a user, once tension is applied to the tendon 100, 100a, 100b, the wedges 302,304 are inherently drawn into their respective barrels 200, thereby increasing the clamping force on the tendon(s) 100, 100a, 100b.

Since the clamp lock anchors 120, 124 of the present disclosure is configured to grip a reinforcement member 100, 100a, 100b (for example a metal wire or metal strand comprising a plurality of wires to form a tendon), it may be used in conjunction with any suitable reinforcement member pre-loading apparatus, which may in turn be used in conjunction with any suitable pre-stressed concrete manufacturing apparatus.

There is thus provided a clamp lock assembly 120, 124 which provides a positive lock on a reinforcement member 100, 100a, 100b. The direct contact and/or force transmission between the shoulder 324, 324a, 324b of the end cap 320, 320' and the clamp wedges 302, 304 means there is provided a constant clamping force on the tendon 100, 100a, 100b. The clamp wedges 302, 304 cannot become unclamped from the reinforcement member 100, 100a, 100b unless the end cap 320 is slackened off.

Hence, when the concrete has set around the reinforcement member 100, a user may slacken the connection between the end cap 320, 320' and associated barrel 200, 200a, 200b, and thus withdraw clamp wedges 302, 304 and barrel 320, 320' from the reinforcement member 100, 100a, 100b. Thus the clamp lock anchors 120,124 of the present disclosure may be re-used.

Additionally because of the simplicity of design of the clamp lock anchor of the present disclosure, when the clamp 120, 124 is cleaned, it is relatively easy to inspect and test. Only the resilient member 312 may need to be replaced on a regular basis.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A clamp lock anchor (120) for clamping a reinforcement member (100) during manufacture of a pre-stressed concrete component;
the clamp lock anchor (120) comprising :
a barrel (200) having :
a barrel screw thread engagement feature (210); and
a wall (202) which defines a tapered internal cavity (204) which extends between :
a first opening (206) with a first diameter at one end of the barrel; and
a second opening (208) at an opposite end of the cavity with a second diameter smaller than the first diameter;
an end cap (320) comprising :
a head (322);
a shoulder (324) which extends away from the head (322); and
an end cap screw thread engagement feature (326) for engagement with the barrel screw thread engagement feature (210);
the end cap screw thread engagement feature (326) being provided between the head (322) and the shoulder (324);
a clamp assembly (300) comprising :
at least two clamp wedges (302, 304) which, when assembled :
form a frusto-conical shaped body (306)
with a load application end (308) at its widest end; and
each wedge defining part of a through passage (310) which provides a clamp surface for receiving the reinforcement member (100);
the barrel (200), end cap (320) and clamp assembly (300) being configured to co-operate such that, in use :
when a reinforcement member (100) is entered in the clamp assembly (300); and
the clamp assembly (300) is located in the barrel cavity (204);
the end cap screw thread (326) is rotatable along the barrel screw thread (210) such that the end cap shoulder (324) is in direct force communication with the load application end (308) of the clamp assembly (300) and thereby urges the clamp assembly (300) into engagement with the barrel internal cavity walls (202), thereby urging the clamp wedges (032, 304) towards one another and clamping the reinforcement member (100).

2. A clamp lock anchor (120) as claimed in claim 1 wherein
the barrel, end cap and clamp assembly are configured to co-operate such that, in use, the end cap shoulder is in direct contact with the load application end of the clamp assembly.

3. A clamp lock anchor (120) as claimed in claim 1 or claim 2 wherein
the taper angle of the barrel internal cavity (204) and the taper angle of the frusto-conical shaped body (306) are substantially the same as each other.

4. A clamp lock anchor (120) as claimed in any one of claims 1 to 3 wherein
the at least two clamp wedges (302, 304) are biased towards one another by a resilient member (312).

5. A clamp lock anchor (120) as claimed in claim 4 wherein
the resilient member (312) is located towards one end of the clamp wedges (302, 304).

6. A clamp lock anchor (120) as claimed in claim 5 wherein
the resilient member (312) is a band or resilient material, and
the resilient member (312) is located in a groove (314) provided in the barrel (200).

7. A clamp lock anchor (120) as claimed in any one of the preceding claims
wherein
the clamp assembly through passage (310) is provided with at least one tooth (316) which extends radially inwardly so as to engage with a reinforcement member (100) located in the clamp assembly through passage (310).

8. A clamp lock anchor (120) as claimed in any one of the preceding claims comprising :
two barrels (200) of substantially similar design;
two clamp assemblies (300) of substantially similar design,
and wherein the end cap (320') comprises :
two shoulders (324a, 324b), one shoulder (324a) extending away from one side of the head (322'), the other shoulder (324b) extending away from an opposite side of the head (322'); and
two end cap screw thread engagement features (326a, 326b);
the barrels (200), end cap (320') and clamp assemblies (300a, 300b) being configured to co-operate such that, in use :
a first reinforcement member (100a) is entered in one of the clamp assemblies (300a), and a second reinforcement member (100b) is entered in the other clamp assembly (300b);
one of the clamp assemblies (300a) is located in one barrel cavity (204a), and the other clamp assembly (300b) is located in the other barrel cavity (204b);
one of the end cap screw threads (326a) is rotatable along one of the barrel screw threads (210a); and the other end cap screw thread (326b) is rotatable along the other barrel screw thread (210b);
such that each of the end cap shoulders (324a, 324b) transmits force to the load application end (308) of the respective clamp assembly; and
each of the clamp assemblies (300a, 300b) is urged into engagement with its respective barrel internal cavity walls, thereby urging the clamp wedges (302, 304) of each clamp assembly (300a, 300b) towards one another and clamping its respective reinforcement member (100) to thereby link the two reinforcement members (100).

9. A reinforcement member (100) pre-loading apparatus (102) comprising a clamp lock anchor (120) as claimed in any one of claims 1 to 8.

10. A pre-stressed concrete component manufacturing apparatus (10) comprising :
a reinforcement member pre-loading apparatus (102) as claimed in claim 8.
